# EUROPEAN PATENT APPLICATION

(11) **EP 4 013 033 A1**
(43) Date of publication of application: **15.06.2022**
(21) Application number: 20868949.7
(22) Date of filing: 09.09.2020
(51) Int. Cl.: H04N 5/232, G06K 9/00, G06K 9/32, G06K 9/34, G06N 3/04

(54) **METHOD AND APPARATUS FOR FOCUSING ON SUBJECT, AND ELECTRONIC DEVICE, AND STORAGE MEDIUM**

(30) Priority: 24.09.2019 CN 201910906011
(71) Applicant: GUANGDONG OPPO MOBILE TELECOMMUNICATIONS CORP., LTD., Dongguan, Guangdong 523860 (CN)
(72) Inventor: JIA, Yuhu, Dongguan, Guangdong 523860 (CN)
(74) Representative: Thorniley, Peter
(86) International application number: PCT/CN2020/114124
(87) International publication number: WO 2021/057474

(57) **Abstract**

The present application relates to a method and apparatus for focusing on a subject, and an electronic device, and a storage medium. The method comprises: acquiring a TOF image; recognizing subjects in the TOF image to determine a target subject; and determining information of the position of the target subject in a preview image, and a preview lens performing focusing on the target subject according to the position information. In combination with the TOF image, which is photographed by a TOF lens, and by means of recognizing the target subject from the TOF image, the preview lens is assisted, on the basis of recognizing the target subject, in performing focusing, such that the focusing accuracy is improved, and the photography quality is further improved.

## Description

### FIELD OF THE INVENTION

The present disclosure relates to the field of image processing, and particularly to a method and a device for focusing on a subject, an electronic device, and a storage medium.

### BACKGROUND

With the development of imaging technology, people are more and more accustomed to taking images or videos and recording various information through an image capture device such as a camera of an electronic device. Generally, the image capture device needs to focus during a shooting process to improve a shooting quality. However, the current focus technology has a problem of inaccurate focus, resulting in poor quality of captured images or videos.

### SUMMARY

In view of the above technical problems, it is necessary to provide a method and a device for focusing on a subject, an electronic device, and a storage medium that can improve focusing accuracy.

In a first aspect, the present disclosure provides a method for focusing on a subject. The method comprises:
obtaining a time-of-flight (TOF) image;
determining the target subject through subject recognition on the TOF image;
obtaining a position information of the target subject in a preview image; and
focusing on the target subject according to the position information through a preview lens.

In an embodiment, the determining the target subject through the subject recognition on the TOF image comprises:
inputting the TOF image into a preset subject detection network to obtain at least two candidate subjects; and
determining the target subject from the at least two candidate subjects.

In an embodiment, the determining the target subject from the at least two candidate subjects comprises:
determining a weight of each of the candidate subjects according to a preset weighting rule; and
determining one candidate subject with a largest weight as the target subject.

In an embodiment, the weighting rule comprises at least one of the following rules:
the weight of the subject increases as a distance between one subject and a lens decreases;
the weight of the subject increases as a distance between one subject and an intersection of diagonals of the TOF image decreases;
a weight of one human is greater than a weight of one animal, and a weight of one animal is greater than a weight of one plant; and
weights of different types of the subjects are determined according to a user instruction.

In an embodiment, the determining the target subject from the at least two candidate subjects comprises:
obtaining a user selection instruction, wherein the user selection instruction is an instruction for a user to select and trigger subject recognition of the at least two candidate subjects; and
determining the candidate subject corresponding to the user selection instruction as the target subject.

In an embodiment, the inputting the TOF image into the preset subject detection network to obtain the at least two candidate subjects comprises:
generating a center weight map corresponding to the TOF image, wherein weight values represented by the center weight map gradually decreases from a center to an edge;
inputting the TOF image and the center weight map into the subject detection model to obtain a subject region confidence map, wherein the subject detection model is a model obtained by training according to the TOF image, the center weight map, and a corresponding labeled subject mask pattern for a same scene; and
determining the at least two candidate subjects in the TOF image according to the subject region confidence map.

In an embodiment, the determining the position information of the target subject in the preview image, and the focusing on the target subject according to the position information through the preview lens comprises:
obtaining a plurality of position coordinates of the target subject in the TOF image;
obtaining a plurality of position coordinates of the target subject in the preview image according to a preset correspondence table between a coordinate system of a TOF lens and a coordinate system of the preview lens; and
focusing on the target subject according to the position coordinates of the target subject in the preview image through the preview lens.

In an embodiment, the determining the position information of the target subject in the preview image, and the focusing on the target subject according to the position information through the preview lens comprises:
include:
obtaining a depth information of the target subject;
determining a focus position information of the target subject in the preview image according to the depth information of the target subject; and
focusing on the target subject according to the focus position information of the target subject in the preview image through the preview lens.

In an embodiment, the method further comprises:
obtaining an RGB image through the preview lens;
wherein the performing the subject recognition on the TOF image to determine the target subject comprises:
   determining the target subject through the subject recognition on the TOF image and the RGB image.

In a second aspect, the present disclosure provides a device for focusing on a subject. The device comprises:
an obtaining module configured to obtain a time-of-flight (TOF) image;
a recognition module configured to perform subject recognition on the TOF image to determine a target subject; and
a focusing module configured to obtain a position information of the target subject in a preview image, wherein a preview lens focuses on the target subject according to the position information.

In a third aspect, the present disclosure provides a computer device comprising:
a memory storing a computer program; and
a processor configured to execute the computer program to perform the method according to the first aspect.

In a fourth aspect, the present disclosure provides a computer-readable storage medium storing a computer program. When the computer program is executed by a processor, the method according to the first aspect is performed.

The present disclosure provides a method and a device for focusing on a subject, an electronic device, and a storage medium. Obtaining a time-of-flight (TOF) image; performing subject recognition on the TOF image to determine a target subject; obtaining a position information of the target subject in a preview image; and focusing on the target subject according to the position information through a preview lens. The TOF image is captured by a TOF lens. The target subject is recognized from the TOF image. Recognizing the target subject assists the preview lens to focus. That is, the preview lens focuses according to a position of the target subject, which improves focusing accuracy and further improves shooting quality.

### BRIEF DESCRIPTION OF DRAWINGS

FIG. 1 is a schematic diagram of an image processing circuit according to an embodiment of the present disclosure.
FIG. 2 is a flowchart of a method for focusing on a subject according to an embodiment of the present disclosure.
FIG. 2.1 is a schematic diagram of a time-of-flight (TOF) image according to an embodiment of the present disclosure.
FIG. 2.2 is a schematic diagram of an image after subject recognition according to an embodiment of the present disclosure.
FIG. 2.3 is a schematic diagram of focusing on the subject according to an embodiment of the present disclosure.
FIG. 3 is another flowchart of the method for focusing on the subject according to an embodiment of the present disclosure.
FIG. 4 is another flowchart of the method for focusing on the subject according to an embodiment of the present disclosure.
FIG. 5 is another flowchart of the method for focusing on the subject according to an embodiment of the present disclosure.
FIG. 6 is another flowchart of the method for focusing on the subject according to an embodiment of the present disclosure.
FIG. 7 is a schematic diagram of a network structure of a subject detection model according to an embodiment of the present disclosure.
FIG. 8 is a schematic diagram of an image processing effect according to an embodiment of the present disclosure.
FIG. 9 is another flowchart of the method for focusing on the subject according to an embodiment of the present disclosure.
FIG. 10 is another flowchart of the method for focusing on the subject according to an embodiment of the present disclosure.
FIG. 11 is another flowchart of the method for focusing on the subject according to an embodiment of the present disclosure.
FIG. 12 is a block diagram of a device for focusing on a subject according to an embodiment of the present disclosure.
FIG. 13 is another block diagram of a device for focusing on a subject according to an embodiment of the present disclosure.
FIG. 14 is a block diagram of an electronic device according to an embodiment of the present disclosure.

### DETAILED DESCRIPTION OF EMBODIMENTS

In order to make purposes, technical solutions, and advantages of the present application clearer, the present application will be further described in detail with reference to accompanying drawings and embodiments below. It should be understood that specific embodiments described herein are only used to explain the present application, and are not used to limit the present application.

A method for focusing on a subject according to an embodiment of the present disclosure can be applied to an electronic device. The electronic device may be a computer device, a personal digital assistant, a tablet computer, a smart phone, a wearable device, or the like, which is provided with a camera. When a camera in the electronic device takes an image, it will automatically focus to ensure that a captured image is clear.

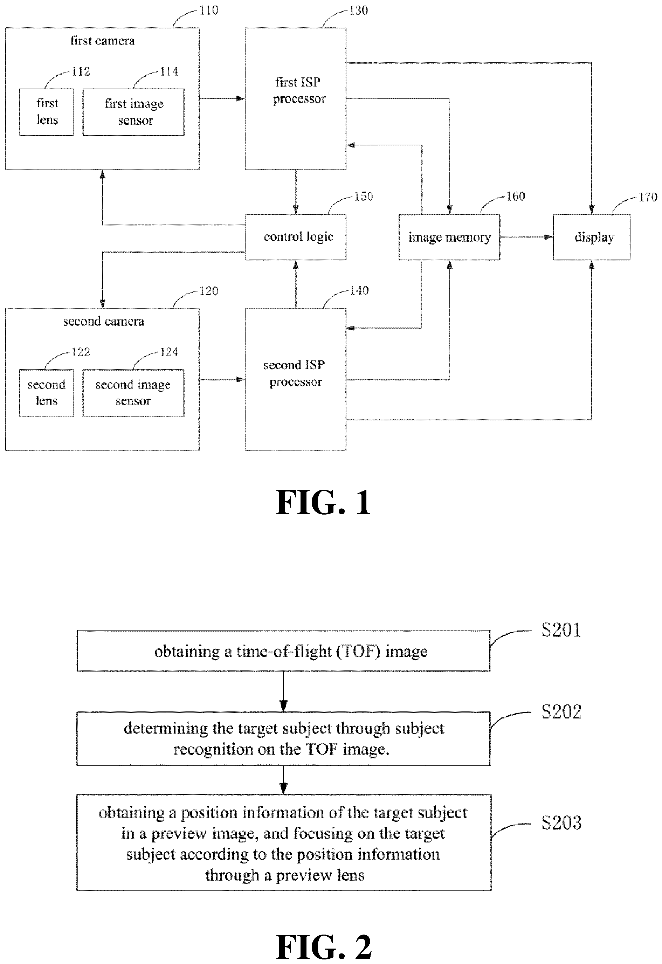

In an embodiment, the electronic device may comprise an image processing circuit. The image processing circuit may comprise hardware and/or software components, and may comprise various processing units that define an image signal processing (ISP) pipeline. FIG. 1 is a schematic diagram of the image processing circuit according to an embodiment of the present disclosure. As shown in FIG. 1, for ease of description, only parts of the image processing technology related to the embodiment of the present disclosure are shown.

As shown in FIG. 1, the image processing circuit comprises a first ISP processor 130, a second ISP processor 140, and a control logic 150. A first camera 110 comprises one or more first lenses 112 and a first image sensor 114. The first image sensor 114 may comprise a color filter array such as a Bayer filter. The first image sensor 114 can obtain light intensity and wavelength information captured by each imaging pixel of the first image sensor 114 and provide a set of image data that can be processed by the first ISP processor 130. The second camera 120 comprises one or more second lenses 122 and a second image sensor 124. The second image sensor 124 may comprise a color filter array such as a Bayer filter. The second image sensor 124 can obtain light intensity and wavelength information captured by each imaging pixel of the second image sensor 124 and provide a set of image data that can be processed by the second ISP processor 140.

A first image collected by the first camera 110 is transmitted to the first ISP processor 130 for processing. After the first ISP processor 130 processes the first image, the first ISP processor 130 may send statistical data of the first image (such as a brightness of the image, a contrast value of the image, a color of the image) to the control logic 150. The control logic 150 may determine control parameters of the first camera 110 according to the statistical data. Then, the first camera 110 can perform operations such as automatic focusing and automatic exposure according to the control parameters. The first image can be stored in an image memory 160 after being processed by the first ISP processor 130. The first ISP processor 130 can also read an image stored in the image memory 160 and process the image. Furthermore, the first image can be directly sent to a display 170 to be displayed after being processed by the ISP processor 130. The display 170 can also read the image in the image memory 160 to display the image.

The first ISP processor 130 processes image data pixel by pixel in multiple formats. For example, each image pixel may have a bit depth of 8, 10, 12, or 14 bits. The first ISP processor 130 can perform one or more image processing operations on the image data, and collect statistical information about the image data. The image processing operations can be performed with same or different bit depth accuracies.

The image memory 160 may be a part of a memory device, a storage device, or an independent dedicated memory in an electronic device, and may comprise direct memory access (DMA) features.

When receiving an interface from the first image sensor 114, the first ISP processor 130 can perform one or more image processing operations, such as temporal filtering. Processed image data can be sent to the image memory 160 for additional processing before being displayed. The first ISP processor 130 receives the processed data from the image memory 160, and performs image data processing on the processed data in RGB and YCbCr color spaces. The image data processed by the first ISP processor 130 may be output to the display 170 for viewing by a user and/or further processed by a graphics engine or a graphics processing unit (GPU). Furthermore, the first ISP processor 130 may also output to the image memory 160, and the display 170 can read the image data from the image memory 160. In an embodiment, the image memory 160 may be configured to implement one or more frame buffers.

The statistical data determined by the first ISP processor 130 may be sent to the control logic 150. For example, the statistical data may comprise statistical information of the first image sensor 114 such as automatic exposure, automatic white balance, automatic focusing, flicker detection, black-level compensation, and shading correction of the first lens 112. The control logic 150 may comprise a processor and/or microcontroller that executes one or more routines (such as firmware). The one or more routines can determine the control parameters of the first camera 110 and control parameters of the first ISP processor 130 according to the received statistical data. For example, the control parameters of the first camera 110 may comprise gain, integration time of exposure control, anti-shake parameters, flash control parameters, control parameters of the first lens 112 (such as a focal length for focusing or zooming), or a combination thereof. The ISP control parameters may comprise gain levels and color correction matrices for automatic white balance and color adjustment (for example, during RGB processing), and shading correction parameters of the first lens 112.

Similarly, a second image collected by the second camera 120 is transmitted to the second ISP processor 140 for processing. After the second ISP processor 140 processes the second image, the second ISP processor 140 may send statistical data of the second image (such as a brightness of the image, a contrast value of the image, a color of the image) to the control logic 150. The control logic 150 may determine control parameters of the second camera 120 according to the statistical data. Then, the second camera 120 can perform operations such as automatic focusing and automatic exposure according to the control parameters. The second image can be stored in the image memory 160 after being processed by the second ISP processor 140. The second ISP processor 140 can also read an image stored in the image memory 160 and process the image. Furthermore, the second image can be directly sent to the display 170 to be displayed after being processed by the ISP processor 140. The display 170 can also read the image in the image memory 160 to display the image. The second camera 120 and the second ISP processor 140 may also implement a same processing process as the first camera 110 and the first ISP processor 130.

In an embodiment, the first camera 110 may be a color camera, and the second camera 120 may be a time-of-flight (TOF) camera or a structured light camera. The TOF camera can obtain a TOF depth image. The structured light camera can obtain a structured light depth image. The first camera 110 and the second camera 120 may both be color cameras. A binocular depth image is obtained by two color cameras. The first ISP processor 130 and the second ISP processor 140 may be a same ISP processor.

The first camera 110 and the second camera 120 capture a same scene to respectively obtain a visible light image and a TOF image, and send the visible light image and the depth image to an ISP processor. The ISP processors may determine the target subject through subject recognition on the TOF image captured by the second camera 120, and determine position information of the target subject in a preview lens of the first camera 110. And, the ISP processors performs focusing processing on the target subject in the preview lens according to the position information. The target subject is recognized through the TOF image, and the target subject is focused according to a position of the target subject in the preview lens, which improves focusing accuracy, thereby improving shooting quality.

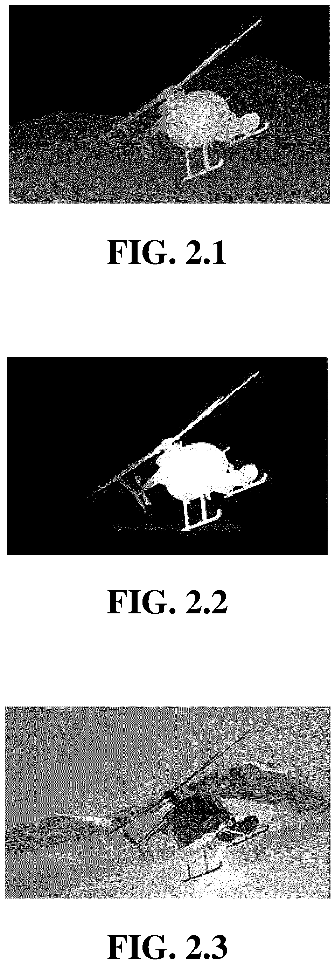

FIG. 2 is a flowchart of a method for focusing on a subject according to an embodiment of the present disclosure. As shown in FIG. 2, a method for focusing on a subject, which can be applied to the electronic device shown in FIG. 1, comprises the following steps.

S201: obtaining a time-of-flight (TOF) image.

The TOF image may be an image taken with a TOF camera, or an image taken with an RGB lens.

In this embodiment, taking the TOF image captured by the TOF camera as an example, the TOF image may be obtained through a TOF lens in real time after the TOF camera is turned on by the electronic device, or the TOF image may be obtained through the TOF lens when a user triggers shooting or focusing function, which is not limited in this embodiment. As shown in FIG. 2.1, a picture acquired through the TOF lens is the TOF image, which comprises a foreground and a background.

S202: determining the target subject through subject recognition on the TOF image.

In this embodiment, ordinary image recognition technology may be used to recognize the subject in the TOF image. For example, when the target subject is a person, face recognition technology may be used to recognize a face in the TOF image, or a pre-trained detection model may be used to recognize the subject in the TOF image. As shown in FIG. 2.2, the subject recognition is performed on the TOF image to determine the target subject. The target subject is an airplane. It can be seen that a picture has a foreground but no background.

Optionally, one TOF image may comprise one subject or multiple subjects. When it is detected that one TOF image comprises multiple subjects, one target subject can be selected from the multiple subjects. For example, different types of subjects are set with different weights in advance, and the subject with the highest weight among the multiple subjects is the target subject. Alternatively, when the multiple subjects are detected, the user is reminded to select one of the multiple subjects as the target subject.

S203: obtaining a position information of the target subject in a preview image, and focusing on the target subject according to the position information through a preview lens.

In this embodiment, a position conversion relationship between the TOF image and the preview image may be obtained by pre-calibration. After the target subject is determined, a position of the target subject in the TOF image can be obtained. According to the position conversion relationship between the TOF image and the preview image, a position of the target subject in the preview image is determined. The position information may be a coordinate information of the target subject in the preview image. For example, a coordinate of each pixel of the target subject in the TOF image is determined first. The coordinate of each pixel of the target subject in the TOF image is converted to a coordinate of the preview image, and thus the position of the target subject in the preview image is obtained. The preview lens determines a focus point according to the position of the target subject in the preview image, and the lens is adjusted to the focus point. Alternatively, depth information of the target subject may be obtained by calculating according to the TOF image. A focus position of the target subject is estimated based on the depth information. A focus point is determined according to the focus position, and the lens is adjusted to the focus point. As shown in FIG. 2.3, a position corresponding to the subject in the preview image of the preview lens is found and focused.

The method for focusing on the subject provided by the present disclosure comprises: obtaining a time-of-flight (TOF) image, determining the target subject through subject recognition on the TOF image, obtaining a position information of the target subject in a preview image, and focusing on the target subject according to the position information through a preview lens. The TOF image is captured by a TOF lens. The target subject is recognized from the TOF image. Recognizing the target subject assists the preview lens to focus. That is, the preview lens focuses according to a position of the target subject, which improves focusing accuracy and further improves shooting quality.

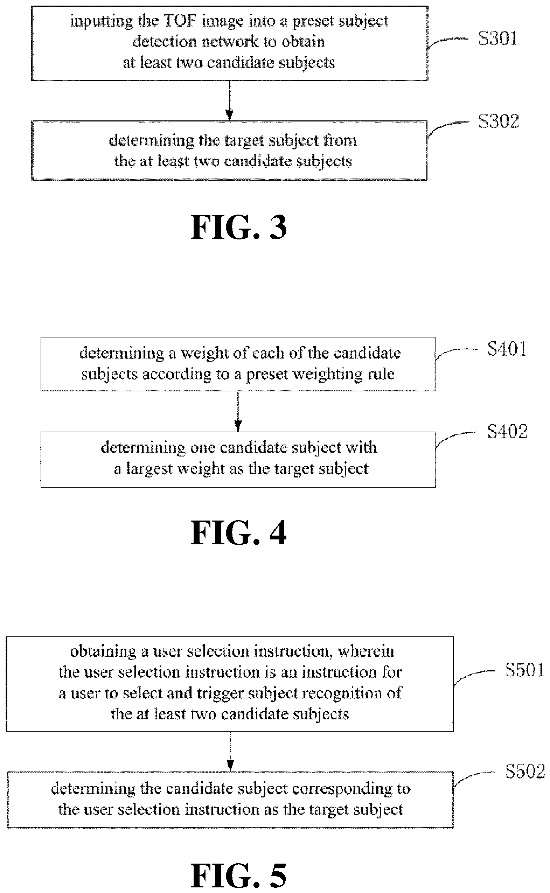

Generally, the TOF image may comprise one subject or multiple subjects. When the TOF image comprises one subject, the subject can be directly determined as the target subject. However, when the TOF image comprises multiple subjects, one target subject needs to be selected from them as a shooting subject. FIG. 3 is another flowchart of the method for focusing on the subject according to an embodiment of the present disclosure. Please refer to FIG. 3, the step S202 "determining the target subject through the subject recognition on the TOF image" in FIG. 2 comprises the following steps.

S301: inputting the TOF image into a preset subject detection network to obtain at least two candidate subjects.

In this embodiment, the subject detection network may be pre-trained for the subject recognition. The TOF image is input into the preset subject detection network , and the candidate subjects can be output. The subject detection network may be obtained by training with a large number of TOF images, and can recognize a foreground of one TOF image, and recognize various subjects, such as people, flowers, cats, dogs, backgrounds, etc.

S302: determining the target subject from the at least two candidate subjects.

In this embodiment, in general, focusing is performed on one subject. Therefore, when it is recognized that there are multiple candidate subjects in one TOF image, one target subject needs to be determined from them. The target subject may be determined according to weights of the various subjects, or the target subject may be selected by the user. Two methods for determining the target subject are described respectively through FIG. 4 and FIG. 5 below.

Please refer to FIG. 4, the step S302 "determining the target subject from the at least two candidate subjects" comprises the following steps.

S401: determining a weight of each of the candidate subjects according to a preset weighting rule.

Optionally, the preset weighting rule comprises at least one of the following rules:
the weight of the subject increases as a distance between one subject and a lens decreases;
the weight of the subject increases as a distance between one subject and an intersection of diagonals of the TOF image decreases;
a weight of one human is greater than a weight of one animal, and a weight of one animal is greater than a weight of one plant; and
weights of different types of the subjects are determined according to a user instruction.

In this embodiment, different types of subjects may be set with different weights in advance. For example, before a system is released, the system presets a set of default weighting rules based on test results. For example, people>birds>cats>dogs>flowers. Or, the closer to the lens, the higher the weight, and the farther away from the lens, the lower the weight. Or, the closer to the intersection of the diagonals of the TOF image, the higher the weight; the farther away from the intersection of the diagonals of the TOF image, the lower the weight, etc. The weighting rules may be determined according to actual scene requirements. Or, the system may set multiple optional weighting rules, and the user can select at least one of them according to actual needs.

S402: determining one candidate subject with a largest weight as the target subject.

In this embodiment, the greater the weight, the more likely the subject is the subject to be photographed. Therefore, the candidate subject with the largest weight may be determined as the target subject.

In this embodiment, the weight of each of the candidate subjects is determined according to the preset weighting rule, and the candidate subject with the largest weight is determined as the target subject. Different weighting rules may be flexibly set according to an actual scene, so that the determined target subject is more in line with the scene and user needs. The method is flexibly adapted to various scenes, and has strong universality.

Please refer to FIG. 5, in another embodiment, the step S302 "determining the target subject from the at least two candidate subjects" may comprise the following steps.

S501: obtaining a user selection instruction, wherein the user selection instruction is an instruction for a user to select and trigger subject recognition of the at least two candidate subjects.

In this embodiment, the user can send a user selection instruction to the device in a variety of ways. For example, when there are multiple candidate subjects determined, the electronic device can display a candidate frame corresponding to each candidate subject on a display screen. The user clicks on one candidate frame to select a subject recognition, and the user selection instruction is generated. Alternatively, the user may also input the user selection instruction by voice. When there are multiple candidate subjects determined, the user may input the subject recognition by voice to generate the user selection instruction. For example, the user needs to take a picture of a person. When recognized subjects comprise a person, an animal, and a plant, the user may input "person" by voice to generate a user selection instruction. The user selection instruction may also be obtained in other ways, which is not limited in this embodiment.

S502: determining the candidate subject corresponding to the user selection instruction as the target subject.

After the electronic device obtains the user selection instruction, the electronic device can determine the subject recognition selected by the user according to the user selection instruction, and determine one corresponding target subject according to the subject recognition.

In the method for focusing on the subject provided in this embodiment, the instruction for the user to select and trigger the subject recognition of the at least two candidate subjects is obtained, and the candidate subject corresponding to the subject recognition selected by the user is determined as the target subject. Therefore, the user can select one corresponding shooting subject according to actual needs, which improves the focusing accuracy, and further increases intelligence of human-computer interaction.

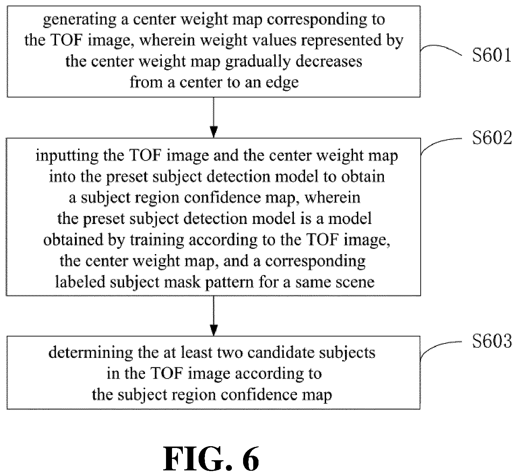

The following will focus on a specific implementation of the subject recognition. Please refer to FIG. 6, in another embodiment, the step S301 "inputting the TOF image into the preset subject detection network to obtain the at least two candidate subjects" may comprise the following steps.

S601: generating a center weight map corresponding to the TOF image, wherein weight values represented by the center weight map gradually decrease from a center to an edge.

The center weight map refers to a map that records a weight value of each pixel in the TOF image. The weight value recorded in the center weight map gradually decreases from a center to four sides. That is, a weight at the center is the largest, and gradually decreases toward the four sides. The center weight map represents weight values from center pixels of the TOF image to edge pixels of the TOF image gradually decreasing.

The ISP processors or a central processor can generate a corresponding center weight map according to a size of the TOF image. Weight values represented by the center weight map gradually decrease from a center to four sides. The center weight map may be generated using a Gaussian function, a first-order equation, or a second-order equation. The Gaussian function may be a two-dimensional Gaussian function.

S602: inputting the TOF image and the center weight map into the subject detection model to obtain a subject region confidence map, wherein the subject detection model is a model obtained by training according to the TOF image, the center weight map, and a corresponding labeled subject mask pattern for a same scene.

Salient subject detection refers to automatically processing areas of interest when facing a scene and selectively ignoring areas that are not of interest. The area of interest is called a subject region.

The subject detection model is obtained by collecting a large amount of training data in advance, and inputting the training data into a subject detection model containing an initial network weight for training. Each set of training data comprises a TOF image, a center weight map, and a labeled subject mask pattern that corresponds to a same scene. The TOF image and center weight map are taken as an input of the trained subject detection model. The labeled subject mask pattern is taken as a ground truth expected to be outputted by the trained subject detection model. The subject mask pattern is an image filter template used to recognize a subject in an image, and can shield other parts of the image and filter out the subject in the image. The subject detection model may be trained to recognize and detect various subjects such as people, flowers, cats, dogs, and backgrounds.

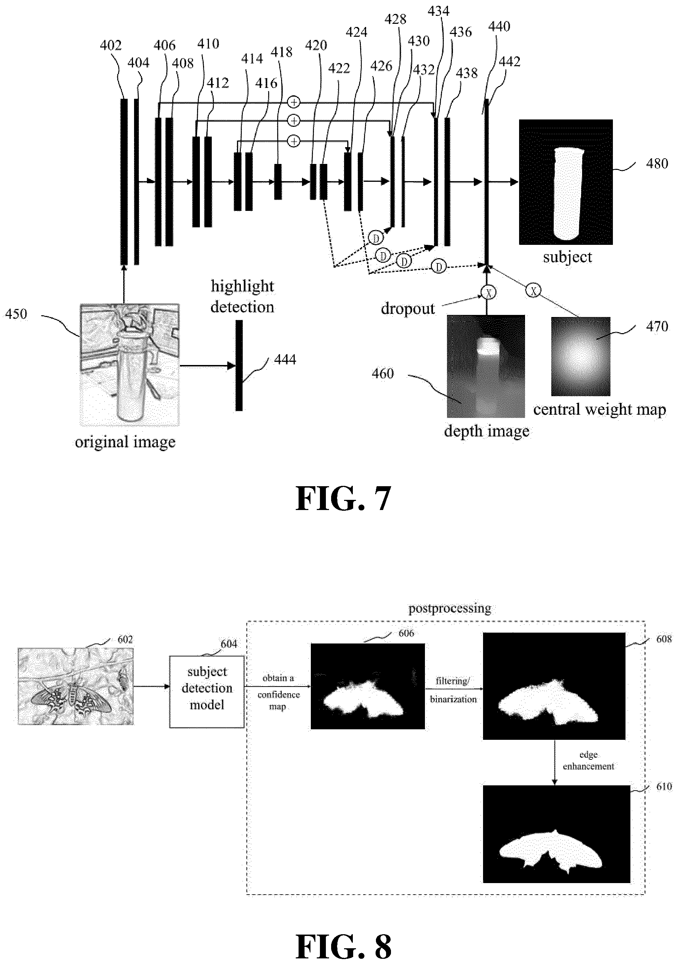

FIG. 7 is a schematic diagram of a network structure of a subject detection model according to an embodiment of the present disclosure. As shown in FIG. 7, the network structure of the subject detection model may comprise a convolutional layer 402, a pooling layer 404, a convolutional layer 406, a pooling layer 408, a convolutional layer 410, a pooling layer 412, a convolutional layer 414, a pooling layer 416, a convolutional layer 418, a convolutional layer 420, a bilinear interpolation layer 422, a convolutional layer 424, a bilinear interpolation layer 426, a convolutional layer 428, a convolution feature connection layer 430, a bilinear interpolation layer 432, a convolutional layer 434, a convolution feature connection layer 436, a bilinear interpolation layer 438, a convolutional layer 440, a convolution feature connection layer 442, and the like. The convolutional layer 402 is an input layer of the subject detection model, and the convolution feature connection layer 442 is an output layer of the subject detection model. The network structure of the subject detection model in this embodiment is only an example and not intended to limit the present disclosure. It can be understood that multiple convolutional layers, multiple pooling layers, multiple bilinear interpolation layers, multiple convolution feature connection layers, and the like may be set as required in the network structure of the subject detection model.

A coding portion of the subject detection model may include the convolutional layer 402, the pooling layer 404, the convolutional layer 406, the pooling layer 408, the convolutional layer 410, the pooling layer 412, the convolutional layer 414, the pooling layer 416, and the convolutional layer 418. A decoding portion includes the convolutional layer 420, the bilinear interpolation layer 422, the convolutional layer 424, the bilinear interpolation layer 426, the convolutional layer 428, the convolution feature connection layer 430, the bilinear interpolation layer 432, the convolutional layer 434, the convolution feature connection layer 436, the bilinear interpolation layer 438, the convolutional layer 440, and the convolution feature connection layer 442. The convolutional layer 406 concatenates with the convolutional layer 434. The convolutional layer 410 concatenates with the convolutional layer 428. The convolutional layer 414 concatenates with the convolutional layer 424. The bilinear interpolation layer 422 is bridged with the convolution feature connection layer 430 by deconvolution feature addition (deconvolution+add). The bilinear interpolation layer 432 is bridged with the convolution feature connection layer 436 by deconvolution feature addition. The bilinear interpolation layer 438 is bridged with the convolution feature connection layer 442 by deconvolution feature addition.

An original image 450 (for example, a TOF image) is inputted into the convolutional layer 402 of the subject detection model, a depth image 460 is applied onto the convolution feature connection layer 442 of the subject detection model, and a center weight map 440 is applied onto the convolution feature connection layer 442 of the subject detection model. Each of the depth image 460 and the center weight map 440 is inputted into the convolution feature connection layer 442 as a multiplication factor. After the original image 450, the depth image 460, and the center weight map 440 are inputted into the subject detection model, a confidence map 480 comprising a subject is outputted.

In a process of training the subject detection model, a dropout probability of a preset value is adopted for the depth image. The preset value may be 50%. The dropout probability is used in a process of training the depth image, so that information of the depth image can be fully mined for the subject detection model. When the subject detection model cannot obtain the depth image, it can still output accurate results. A dropout manner is adopted for an input of the depth image, so that robustness of the subject detection model for the depth image is better, and the subject region can be accurately separated even if there is no depth image.

Furthermore, because photographing and calculation of a depth image is quite time-consuming and labor-consuming in a normal photographing process of an electronic device, and it is difficult to obtain the depth image, the dropout probability of the depth image is set to be 50% during training, which can ensure that the subject detection model can still detect normally when there is no depth information.

Highlight detection is performed on the original image 450 by using a highlight detection layer 444, so as to recognize a highlight region in the original image. Filtering processing is performed on a subject region confidence map outputted by the subject detection model based on an adaptive threshold value, so as to obtain a binary mask pattern. Morphologic processing and guided filtering processing are performed on the binary mask pattern to obtain a subject mask pattern. Differential processing is performed on the subject mask pattern and the original image comprising the highlight region, and the highlight region is removed from the subject mask pattern to obtain a subject with highlight eliminated. The subject region confidence map is a confidence map ranging from 0 to 1. The subject region confidence map comprises more noisy points, there are many noisy points with lower confidences, or small high-confidence areas clustered together. Filtering processing is performed based on a region-adaptive confidence threshold value to obtain the binary mask pattern. Morphologic processing is performed on the binary mask pattern to further reduce noise, and guided filtering processing is performed to make an edge smoother. It can be understood that the subject region confidence map may be a subject mask pattern comprising noisy points.

In an embodiment, a manner of training the subject detection model comprises: obtaining a TOF image and a labeled subject mask pattern for a same scene; generating a center weight map corresponding to the TOF image, wherein weight values represented by the center weight map gradually decreases from a center to an edge; applying the TOF image to an input layer of the subject detection model containing an initial network weight; applying the center weight map to an output layer of the initial subject detection model; taking the labeled subject mask pattern as a ground truth outputted by the subject detection model; and training the subject detection model containing the initial network weight to obtain a target network weight of the subject detection model.

In this embodiment, the training may adopt the TOF image and the center weight map. That is, no depth image is applied onto the output layer of the network structure of the subject detection model shown in FIG. 7, the TOF image is applied onto the convolutional layer 402, and the center weight map 470 is applied onto the convolution feature connection layer 442 of the subject detection model.

In an embodiment, the ISP processors or the central processor may input the TOF image and the center weight map into the subject detection model, for performing detection to obtain the subject region confidence map. The subject region confidence map is configured to record a probability that the subject is a certain recognizable subject. For example, a probability that a pixel represents a person is 0.8, a probability that the pixel represents a flower is 0.1, and a probability that the pixel represents a background is 0.1.

FIG. 8 is a schematic diagram of an image processing effect according to an embodiment of the present disclosure. As shown in FIG. 8, there is a butterfly in a TOF image 602. The TOF image is inputted into a subject detection model to obtain a subject region confidence map 604. Filtering and binarization processing is performed on the subject region confidence map 604 to obtain a binary mask pattern 606. Morphologic processing and guided filtering processing are performed on the binary mask pattern 606 to implement edge enhancement to obtain a subject mask pattern 608.

S603: determining the at least two candidate subjects in the TOF image according to the subject region confidence map.

The subjects refer to various subjects such as a person, a flower, a cat, a dog, a cattle, a blue sky, a white cloud, and a background. The target subject refers to a subject in need, which may be selected according to needs.

Specifically, the ISP processors or the central processor may select a subject with a highest confidence or a second highest confidence in the visible light image according to the subject region confidence map. If there is only one subject, the subject is determined as a target subject. If there are multiple subjects, one or more subjects of them may be selected as target subjects according to needs.

In the method for focusing on the subject of this embodiment, after the TOF image is obtained and the center weight map corresponding to the TOF image is generated, the TOF image and the center weight map are inputted into the subject detection model for detection, so as to obtain the subject region confidence map. The target subject in the TOF image may be determined according to the subject region confidence map. A subject in a center of the image may be detected more easily by using the center weight map. The target subject in the visible light image may be recognized more accurately by using the subject detection model obtained by training according to the TOF image, the center weight map, the subject mask pattern and the like, thereby making focus more accurate.

In the above embodiments, the subject recognition is performed based on the TOF image. Furthermore, the subject recognition may be performed based on the TOF image and a preview RGB (i.e. red, green, and blue) image. Optionally, the method for focusing on the subject may further comprises: obtaining an RGB image through the preview lens, so that the step S202 "determining the target subject through the subject recognition on the TOF image" comprises: determining the target subject through the subject recognition on the TOF image and the RGB image.

In this embodiment, the RGB image may be further obtained by the preview lens, and the TOF image and the RGB image are used for the subject recognition to determine the target subject, which can make the subject recognition more accurate. The TOF image and the RGB image may be inputted into the aforementioned subject detection model to recognize a subject therein. A method of using the subject detection model to recognize the subject and determining a target subject based on the recognized subject may refer to the above embodiments, which will not be described in detail herein.

In the above embodiments, after the target subject is determined, the preview lens may focus according to a plurality of position coordinates of the target subject in the preview image, or may focus on a focus position of the target subject calculated according to the depth information of the target subject. A specific implementation for determining the position information of the target subject in the preview lens is described below.

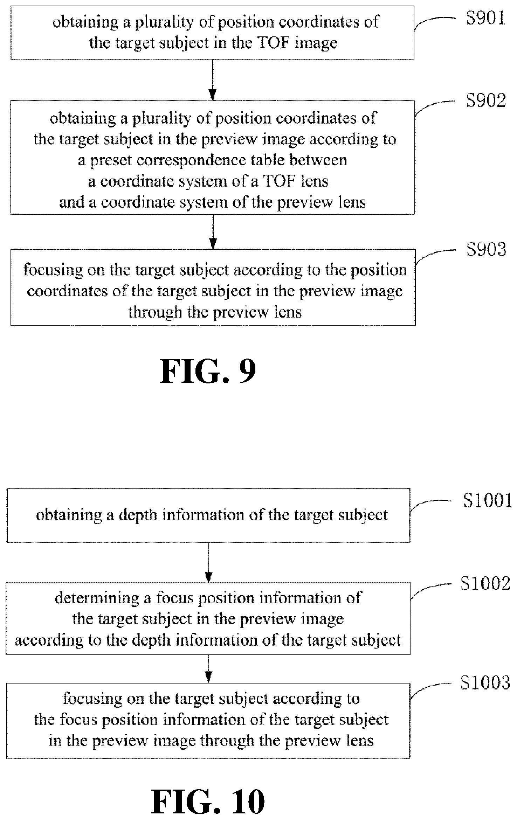

Please refer to FIG. 9, in another embodiment, the step S203 "obtaining the position information of the target subject in the preview image, and focusing on the target subject according to the position information through the preview lens" may comprise the following steps.

S901: obtaining a plurality of position coordinates of the target subject in the TOF image.

In this embodiment, a TOF camera coordinate system may be established for the TOF camera. A position coordinate of each pixel of the target subject in the TOF camera coordinate system is determined. That is, the position coordinates of the target subject in the TOF image are determined.

S902: obtaining a plurality of position coordinates of the target subject in the preview image according to a preset correspondence table between a coordinate system of a TOF lens and a coordinate system of the preview lens.

In this embodiment, a review camera coordinate system may be further established for a preview camera. A coordinate of a pixel A in the TOF image and a coordinate of a corresponding pixel A1 in the preview image may be determined by pre-calibration. After obtaining the coordinates of a large number of the pixels A and the coordinates of a large number of the pixels A1, the correspondence table between the coordinate system of the TOF lens and the coordinate system of the preview lens can be calculated. Therefore, after determining the position coordinates of the target subject in the TOF image, the position coordinates of the target subject in the preview image can be determined according to the correspondence table between the coordinate system of the TOF lens and the coordinate system of the preview lens.

S903: focusing on the target subject according to the position coordinates of the target subject in the preview image through the preview lens.

In this embodiment, the preview lens can determine a focus point according to the position coordinates of the target subject in the preview image. A position and angle of the preview lens are adjusted, so that the preview lens is adjusted to the focus point.

The method for focusing on the subject provided in this embodiment comprises: obtaining the position coordinates of the target subject in the TOF image, obtaining the position coordinates of the target subject in the preview image according to the preset correspondence table between the coordinate system of the TOF lens and the coordinate system of the preview lens, and focusing on the target subject according to the position coordinates of the target subject in the preview image through the preview lens. Through the preset correspondence table between the coordinate system of the TOF lens and the coordinate system of the preview lens, the position coordinates of the target subject in the preview image can be quickly and accurately determined, which improves the focusing accuracy and focusing efficiency.

Please refer to FIG. 10, in yet another embodiment, the step S203 "obtaining the position information of the target subject in the preview image, and focusing on the target subject according to the position information through the preview lens" may comprise the following steps.

S1001: obtaining a depth information of the target subject.

In this embodiment, after the target subject is determined, a region containing the target subject is intercepted in the TOF image, and depth information of the region containing the target subject is calculated. Alternatively, depth information of an entirety of the TOF image is calculated, and then the depth information of the target subject is obtained according to the depth information of the entirety of the TOF image.

S 1002: determining a focus position information of the target subject in the preview image according to the depth information of the target subject.

In this embodiment, the focus position of the target subject can be estimated according to the depth information of the target subject, and the focus position can be further fine-adjusted. The depth information may comprise depth values of the pixels in the TOF image. That is, after obtaining a depth value of each pixel in a region where the target subject is located, if the region is a single pixel, a depth value of the pixel may be directly used for automatic focusing. If the region comprises multiple pixels, depth values of the pixels need to be merged into a single depth value. Preferably, an average value of the depth values of the pixels in the region is taken as a single depth information of the region. Furthermore, in order to avoid that a depth value of a single pixel is too large or too small to affect an accurate depth of the focused subject in the region, according to a distribution of the depth values, the depth values of the pixels in a middle distribution are selected to be averaged, so as to obtain the single depth information of the region. The single depth information of the region may be obtained by other methods, which is not limited herein. After obtaining the single depth information of the region where the target subject is located, a focal length of a zoom camera lens is adjusted to focus on that depth. Such adjustment may be performed through a preset program. Specifically, there is a certain relationship between the focal length and the depth value. The relationship is saved in a memory of a camera system in a form of a program. When a single depth value is obtained, an adjustment amount is calculated according to the program, and then automatic focusing is realized.

S1003: focusing on the target subject according to the focus position information of the target subject in the preview image through the preview lens.

In the method for focusing on the subject provided in this embodiment, the depth information of the target subject is obtained, and the focus position information of the target subject in the preview image is determined according to the depth information of the target subject. After the target subject is recognized, the depth information of the target subject is calculated to estimate the focus position of the subject. The preview lens focuses on the target subject according to the focus position information of the target subject in the preview image. The method can focus on the target subject more quickly.

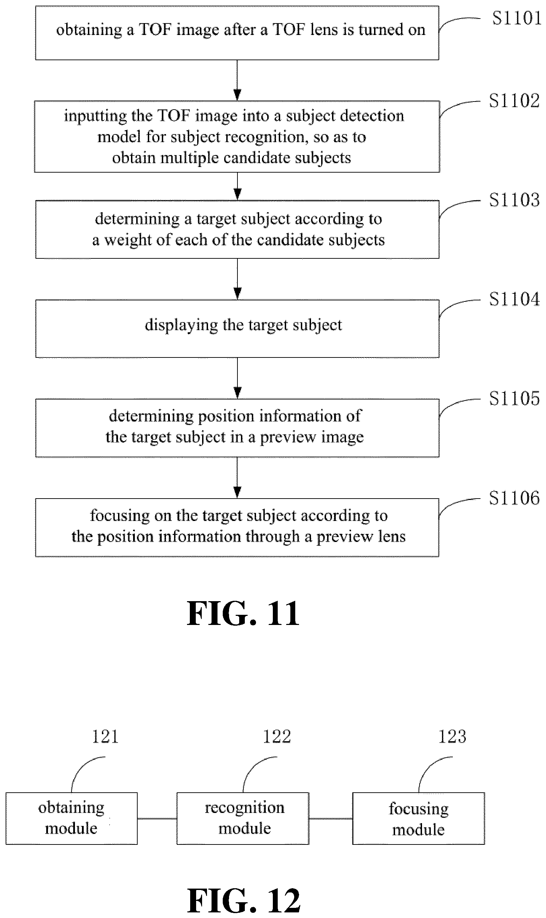

FIG. 11 is another flowchart of the method for focusing on the subject according to an embodiment of the present disclosure. The method comprises the following steps.

S1101: obtaining a TOF image after a TOF lens is turned on.

S1102: inputting the TOF image into a subject detection model for subject recognition, so as to obtain multiple candidate subjects.

S1103: determining a target subject according to a weight of each of the candidate subjects.

S1104: displaying the target subject.

S1105: determining a position information of the target subject in a preview image.

S1106: focusing on the target subject according to the position information through a preview lens.

The method for focusing on the subject provided in this embodiment comprises: obtaining the TOF image, inputting the TOF image into the subject detection model for the subject recognition to obtain the candidate subjects, determining the target subject according to the weight of each of the candidate subjects, determining the position information of the target subject in the preview image, and focusing on the target subject according to the position information through the preview lens. The TOF image is captured by a TOF lens. The target subject is recognized from the TOF image. Recognizing the target subject assists the preview lens to focus, which improves focusing accuracy and further improves shooting quality.

It should be understood that although the steps in the flowcharts of FIGs. 2-11 are displayed in sequence as indicated by arrows, these steps are not necessarily performed in sequence in orders indicated by the arrows. Unless explicitly stated in the present disclosure, there is no strict order for execution of these steps, and these steps may be executed in other orders. Moreover, at least some of the steps in FIGs. 2-11 may comprise multiple sub-steps or multiple stages. These sub-steps or stages are not necessarily executed at a same time, but may be executed at different times. These sub-steps or stages are not necessarily executed sequentially, but may be executed in turn or alternately with other steps or at least some of the sub-steps or stages of other steps.

In an embodiment, please refer to FIG. 12, a device for focusing on a subject is provided. The device comprises:
an obtaining module 121 configured to obtain a time-of-flight (TOF) image;
a recognition module 122 configured to determine the target subject through subject recognition on the TOF image; and
a focusing module 123 configured to obtain a position information of the target subject in a preview image, wherein a preview lens focuses on the target subject according to the position information.

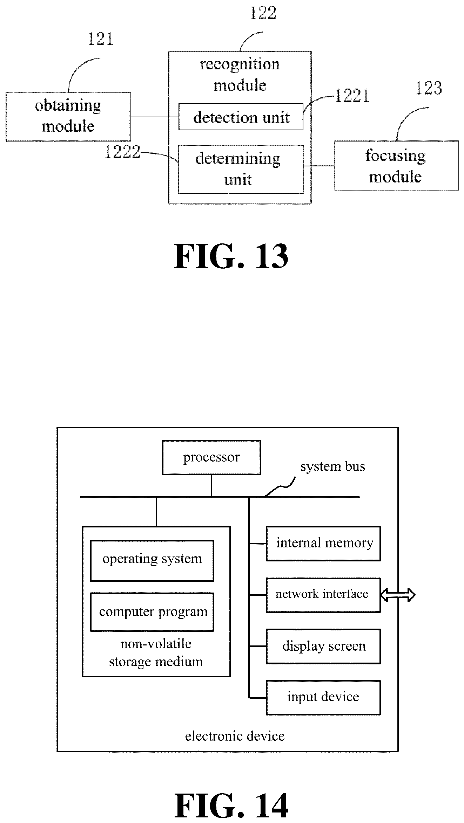

In an embodiment, please refer to FIG. 13, the recognition module 122 comprises:
a detection unit 1221 configured to input the TOF image into a preset subject detection network to obtain at least two candidate subjects; and
a determining unit 1222 configured to determine the target subject from the at least two candidate subjects.

In an embodiment, the determining unit 1222 is further configured to determine a weight of each of the candidate subjects according to a preset weighting rule, and determine one candidate subject with a largest weight as the target subject.

In an embodiment, the weighting rule comprises at least one of the following rules:
the weight of the subject increases as a distance between one subject and a lens decreases;
the weight of the subject increases as a distance between one subject and an intersection of diagonals of the TOF image decreases;
a weight of one human is greater than a weight of one animal, and a weight of one animal is greater than a weight of one plant; and
weights of different types of the subjects are determined according to a user instruction.

In an embodiment, the determining unit 1222 is further configured to obtain a user selection instruction, and determine the candidate subject corresponding to the user selection instruction as the target subject. The user selection instruction is an instruction for a user to select and trigger subject recognition of the at least two candidate subjects.

In an embodiment, the recognition module 122 is further configured to generate a center weight map corresponding to the TOF image, input the TOF image and the center weight map into the subject detection model to obtain a subject region confidence map, and determine the at least two candidate subjects in the TOF image according to the subject region confidence map. Weight values represented by the center weight map gradually decrease from a center to an edge. The subject detection model is a model obtained by training according to the TOF image, the center weight map, and a corresponding labeled subject mask pattern for a same scene.

In an embodiment, the focusing module 123 is further configured to obtain a position coordinate of the target subject in the TOF image, obtain a position coordinate of the target subject in the preview image according to a preset correspondence table between a coordinate system of a TOF lens and a coordinate system of the preview lens, and focus on the target subject according to the position coordinate of the target subject in the preview image through the preview lens.

In an embodiment, the focusing module 123 is further configured to obtain a depth information of the target subject, determine a focus position information of the target subject in the preview image according to the depth information of the target subject, and focus on the target subject according to the focus position information of the target subject in the preview image through the preview lens.

In an embodiment, the obtaining module 121 is further configured to obtain an RGB image through the preview lens, and the recognition module 122 is further configured to determine the target subject through the subject recognition on the TOF image and the RGB image.

For specific definition of the device for focusing on the subject, please refer to the above definition of the method for focusing on the subject, which will not be described in detail herein. Each of the aforementioned modules in the device for focusing on the subject may be implemented in whole or in part by software, hardware, and a combination thereof. The aforementioned modules may be embedded in or independent of a processor of a computer device in a form of hardware, or may be stored in a memory of the computer device in a form of software, so that the processor can call and execute operations corresponding to the aforementioned modules.

In an embodiment, an electronic device is provided. The electronic device may be a terminal, and its structure may be as shown in FIG. 14. The electronic device comprises a processor, a memory, a network interface, a display screen, and an input device that are connected through a system bus. The processor of the electronic device is configured to provide computing and control capabilities. The memory of the electronic device comprises a non-volatile storage medium and an internal memory. The non-volatile storage medium stores an operating system and a computer program. The internal memory provides an environment for operation of the operating system and the computer program in the non-volatile storage medium. The network interface of the electronic device is configured to communicate with an external terminal through a network connection. The computer program is executed by the processor to perform the method for focusing on the subject. The display screen of the electronic device may be a liquid crystal display screen or an electronic ink display screen. The input device of the electronic device may be a touch layer covered on the display screen, or may be a button, a trackball, or a touch pad disposed on a housing of the electronic device, or may be an external keyboard, touch pad, or mouse.

Those skilled in the art can understand that the structure shown in FIG. 14 is only a block diagram of parts of a structure related to a solution of the present disclosure, and does not constitute a limitation on the electronic device to which the solution of the present disclosure is applied. A specific electronic device may comprise more or fewer components than those shown in the figure, combine some components, or have a different arrangement of the components.

In an embodiment, a computer device is provided, comprising a memory and a processor. The memory stores a computer program. The processor is configured to execute the computer program to perform the following steps:
obtaining a time-of-flight (TOF) image;
determining the target subject through subject recognition on the TOF image;
obtaining a position information of the target subject in a preview image; and
focusing on the target subject according to the position information through a preview lens.

In an embodiment, a computer-readable storage medium is provided, storing a computer program. When the computer program is executed by a processor, the following steps are performed:
obtaining a time-of-flight (TOF) image;
determining the target subject through subject recognition on the TOF image;
obtaining a position information of the target subject in a preview image; and
focusing on the target subject according to the position information through a preview lens.

Those skilled in the art can understand that all or some of the steps of the methods in the above embodiments may be implemented by a computer program instructing relevant hardware. The computer program may be stored in a non-volatile computer-readable storage medium. When the computer program is executed, the steps of the methods in the above embodiments are performed. Any memory, storage, database, or another medium used in the embodiments of the present disclosure may comprise a non-volatile memory and/or a volatile memory. The non-volatile memory may be a read-only memory (ROM), a programmable ROM (PROM), an electrically programmable ROM (EPROM), an electrically erasable programmable ROM (EEPROM), or a flash memory. The volatile memory may be a random access memory (RAM) or an external high-speed buffer memory. As an illustration and not a limitation, the RAM may be obtained in various forms such as a static RAM (SRAM), a dynamic RAM (DRAM), a synchronous DRAM (SDRAM), a double data rate SDRAM (DDRSDRAM), an enhanced SDRAM (ESDRAM), a synchlink DRAM (SLDRAM), a rambus direct RAM (RDRAM), a direct RDRAM (DRDRAM), or a rambus dynamic RAM (RDRAM).

Technical features in the above embodiments may be randomly combined. For concise description, not all possible combinations of the technical features in the above embodiments are described. However, the combinations of the technical features should all be considered as falling within a scope described in the present specification, provided that they do not conflict with each other.

The above embodiments only illustrate some implementations of the present disclosure and are described in detail, but they should not be used to limit to the claimed scope of the present disclosure. It should be pointed out that those skilled in the art may make several modifications and improvements without departing from a concept of the present disclosure, and all of these fall within the claimed scope of the present disclosure. Therefore, the claimed scope of the present disclosure should conform to the appended claims.

## Claims

1. A method for focusing on a subject, comprising:
obtaining a time-of-flight (TOF) image;
determining the target subject through subject recognition on the TOF image;
obtaining a position information of the target subject in a preview image; and
focusing on the target subject according to the position information through a preview lens.

2. The method as claimed in claim 1, **characterized in that** the determining the target subject through the subject recognition on the TOF image comprises:
inputting the TOF image into a preset subject detection network to obtain at least two candidate subjects; and
determining the target subject from the at least two candidate subjects.

3. The method as claimed in claim 2, **characterized in that** the determining the target subject from the at least two candidate subjects comprises:
determining a weight of each of the candidate subjects according to a preset weighting rule; and
determining one candidate subject with a largest weight as the target subject.

4. The method as claimed in claim 3, **characterized in that** the weighting rule comprises at least one of the following rules:
the weight of the subject increases as a distance between one subject and a lens decreases;
the weight of the subject increases as a distance between one subject and an intersection of diagonals of the TOF image decreases;
a weight of one human is greater than a weight of one animal, and a weight of one animal is greater than a weight of one plant; and
weights of different types of the subjects are determined according to a user instruction.

5. The method as claimed in claim 2, **characterized in that** the determining the target subject from the at least two candidate subjects comprises:
obtaining a user selection instruction, wherein the user selection instruction is an instruction for a user to select and trigger subject recognition of the at least two candidate subjects; and
determining the candidate subject corresponding to the user selection instruction as the target subject.

6. The method as claimed in claims 2-5, **characterized in that** the inputting the TOF image into the preset subject detection network to obtain the at least two candidate subjects comprises:
generating a center weight map corresponding to the TOF image, wherein weight values represented by the center weight map gradually decreases from a center to an edge;
inputting the TOF image and the center weight map into the subject detection model to obtain a subject region confidence map, wherein the subject detection model is a model obtained by training according to the TOF image, the center weight map, and a corresponding labeled subject mask pattern for a same scene; and
determining the at least two candidate subjects in the TOF image according to the subject region confidence map.

7. The method as claimed in claims 1-5, **characterized in that** the determining the position information of the target subject in the preview image, and the focusing on the target subject according to the position information through the preview lens comprises:
obtaining a plurality of position coordinates of the target subject in the TOF image;
obtaining a plurality of position coordinates of the target subject in the preview image according to a preset correspondence table between a coordinate system of a TOF lens and a coordinate system of the preview lens; and
focusing on the target subject according to the position coordinates of the target subject in the preview image through the preview lens.

8. The method as claimed in claims 1-5, **characterized in that** the determining the position information of the target subject in the preview image, and the focusing on the target subject according to the position information through the preview lens comprises:
include:
obtaining a depth information of the target subject;
determining a focus position information of the target subject in the preview image according to the depth information of the target subject; and
focusing on the target subject according to the focus position information of the target subject in the preview image through the preview lens.

9. The method as claimed in claims 1-5, further comprising:
obtaining an RGB image through the preview lens;
wherein the performing the subject recognition on the TOF image to determine the target subject comprises:
determining the target subject through the subject recognition on the TOF image and the RGB image.

10. A device for focusing on a subject, comprising:
an obtaining module configured to obtain a time-of-flight (TOF) image;
a recognition module configured to perform subject recognition on the TOF image to determine a target subject; and
a focusing module configured to obtain a position information of the target subject in a preview image, wherein a preview lens focuses on the target subject according to the position information.

11. A computer device, comprising:
a memory storing a computer program; and
a processor configured to execute the computer program to perform the method as claimed in any one of claims 1 to 9.

12. A computer-readable storage medium, storing a computer program, wherein when the computer program is executed by a processor, the method as claimed in any one of claims 1 to 9 is performed.
